# EUROPEAN PATENT SPECIFICATION

(11) **EP 0 140 374 B1**
(45) Date of publication and mention of the grant of the patent: **04.05.1994**
(21) Application number: 84113083.4
(22) Date of filing: 30.10.1984
(51) Int. Cl.: G03B 42/02, G01T 1/29

(54) **High-speed image recording apparatus using stimulable phosphor sheets and lighttight envelope used for same**
Vorrichtung für Hochgeschwindigkeitsaufnahmen mittels stimulierbarer Phosphorfolien sowie lichtdichte Taschen dafür
Appareil d'enregistrement d'images à haute fréquence utilisant des feuilles en phosphore stimulable ainsi qu'enveloppes étanches à la lumière pour ces dernières

(30) Priority: 02.11.1983 JP 206556/83; 14.11.1983 JP 213877/83
(43) Date of publication of application: 08.05.1985
(73) Proprietor: FUJI PHOTO FILM CO., LTD., Kanagawa-ken, 250-01 (JP)
(72) Inventor: Seto, Kimio c/o Fuji Photo Film Co., Ltd., Ashigarakami-gun Kanagawa-ken (JP); Ohgoda, Makoto c/o Fuji Photo Film Co., Ltd., Ashigarakami-gun Kanagawa-ken (JP); Yamamoto, Takaaki c/o Fuji Photo Film Co., Ltd., Ashigarakami-gun Kanagawa-ken (JP); Kato, Hisatoyo c/o Fuji Photo Film Co., Ltd., Ashigarakami-gun Kanagawa-ken (JP)
(74) Representative: Klunker, Hans-Friedrich, Dr.

(56) References cited:
- EP-A- 0 077 676
- US-A- 4 063 101
- US-A- 4 199 687
- US-A- 4 310 117
- PATENT ABSTRACTS OF JAPAN, vol. 6, no. 255 (P-162)(1133), December 14, 1982 ; & JP-A-57 150 840
- PATENT ABSTRACTS OF JAPAN, vol. 7, no. 152 (P-208)(1297), July 5, 1983 ; & JP-A-58 63 931

## Description

This invention relates to an envelope for conveyance of a stimulable phosphor sheet in an image recording apparatus.

High-speed image recording apparatuses have heretofore been used for angiography and the like. The high-speed image recording apparatuses record X-ray images of objects on many X-ray films by sequentially projectin the X-ray images onto the X-ray films. The apparatuses are suitable particularly for sequentially recording angiograms, which change from time to time, on many X-ray films when the diffusion speed of the contrast media is different among the objects.

In the high-speed image recording apparatuses, the X-ray film is used in the form sandwiched, for example, between two intensifying screens and housed in a flexible lighttight envelope.

The high-speed image recording apparatus uses a lighttight envelope in which an X-ray film is housed.

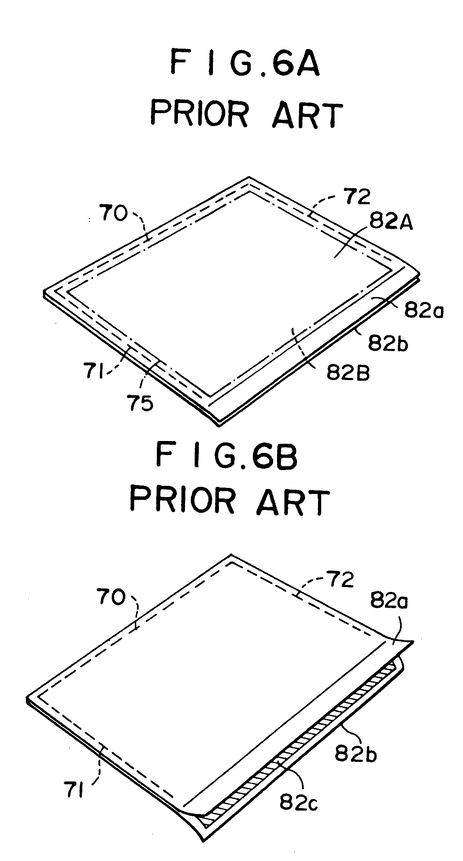

The lighttight envelope has a configuration for sufficiently shielding the X-ray film from light (US-A-4 310 117; US-A-4 063 101), Fig. 6A is a perspective view showing an example of the lighttight envelope employed in the conventional high-speed image recording apparatus using an X-ray film, and Fig. 6B is a perspective view showing the lighttight envelope of Fig. 6A with the inlet opened.

Sufficiently lighttight, black plastic sheets 82A and 82B are heat-sealed at their sides 70, 71 and 72 to form an envelope open at one side. The open side of the plastic sheet 82A continues into an opening edge portion 82a, and the open side of the plastic sheet 82B continues into an opening edge portion 82b. A face-to-face fastener 82c consisting of a tape provided with many fine hook-like fibers and a tape provided with many fine loop-like fibers is positioned so that the tapes extend on the inner surfaces of the opening edge portions 82a and 82b over the entire lengths thereof. The opening edge portions 82a and 82b are lighttightly engaged with each other by the face-to-face fastener 82c. As indicated by a chain line in Figure 6A, an X-ray film 75 sandwiched between a pair of intensifying screens (not shown) is housed inside of the sealed sides 70, 71 and 72 and the face-to-face fastener 82c. Thus the X-ray film 75 is handled and conveyed in a condition sufficiently shielded from light.

The conventional lighttight envelope as described above houses the X-ray film 75 in the sufficiently lighttight condition and is loaded into the high-speed image recording apparatus. However, since the face-to-face fastener 82c positioned at the opening edge portions 82a and 82b for securing sufficient lighttightness strongly closes the opening through which the X-ray film 75 is inserted into and removed from the lighttight envelope and since the area of the opening is small, insertion and removal of the X-ray film 75 are not easy to conduct.

Since the X-ray film is very sensitive to light, it must be maintained in the condition completely shielded from light from the stage prior to image recording up to development. Therefore, in an image recording apparatus, the X-ray film is housed in a lighttight envelope having the configuration as described above, and is fed to a film receiving section in the condition completely shielded from light. After an image is recorded on the X-ray film, the X-ray film is removed in the form housed in the lighttight envelope. Thereafter, the X-ray film is taken out of the lighttight envelope in a darkroom and is subjected to a development processing.

On the other hand, the stimulable phosphor sheet need not be shielded from light before an X-ray image is recorded therein. Also, the degree of light shielding for the stimulable phosphor sheet after an X-ray image is recorded thereon may be far lower than the degree of light shielding required for the X-ray film. Therefore, when the stimulable phosphor sheet is used in a high-speed image recording apparatus, it is not advantageous from the viewpoint of operating efficiency to employ the conventional lighttight envelope for the X-ray film haying the configuration as described above directly as a lighttight envelope for the stimulable phosphor sheet.

In view of the aforesaid feature of the stimulable phosphor sheet, it is the problem underlying the invention to provide an envelope being configured such that the stimulable phosphor sheet is housed in a comparatively simple lighttight envelope which is not so lighttight and which has a configuration facilitating insertion and removal of the stimulable phosphor sheet.

This problem is solved in accordance with the features of claim 1. The invention provides a lighttight envelope which has a comparatively simple light shielding function, which enables easy insertion and removal of a stimulable phosphor sheet, and which is suitable for use in the high-speed X-ray image recording apparatus.

As the means for preventing the upper sheet and the lower sheet from separating from each other, any means may be employed insofar as the upper sheet and the lower sheet can be easily engaged releasably with each other and prevented from naturally separating from each other.

In the lighttight envelope of the present invention, since the envelope has a wide opening, it is easy to insert a stimulable phosphor sheet into the envelope and to remove the stimulable phosphor sheet therefrom. Further, since the envelope exhibits ligttightness to a reasonable extent, it can be directly used in the high-speed image recording apparatus. The lighttight envelope also has the effect of protecting the surface of the stimulable phosphor sheet.

The present invention will hereinbelow be described in further detail with reference to the accompanying drawings, in which:
Fig. 1 is a schematic view showing an embodiment of a high-speed image recording apparatus,
Fig. 2 is a sectional side view showing the magazine with the shutter closed in the high-speed image recording apparatus in Fig. 1,
Fig. 3 is a perspective view showing an embodiment of the lighttight envelope in accordance with the present invention,
Fig. 4 is a perspective view showing the lighttight envelope of Fig. 3 with the inlet opened,
Fig. 4A is a partial sectional view showing the lighttight envelope of Fig. 4,
Fig. 4B is a rear view showing the lighttight envelope of Fig. 4,
Fig. 5A, 5B and 5C are plan views showing further embodiments of the lighttight envelope in accordance with the present invention,
Figure 6A is a perspective view showing the conventional lighttight envelope used in the conventional high-speed image recording apparatus using X-ray films and,
Figure 6B is a perspective view showing the lighttight envelope of Figure 6A with the inlet opened.

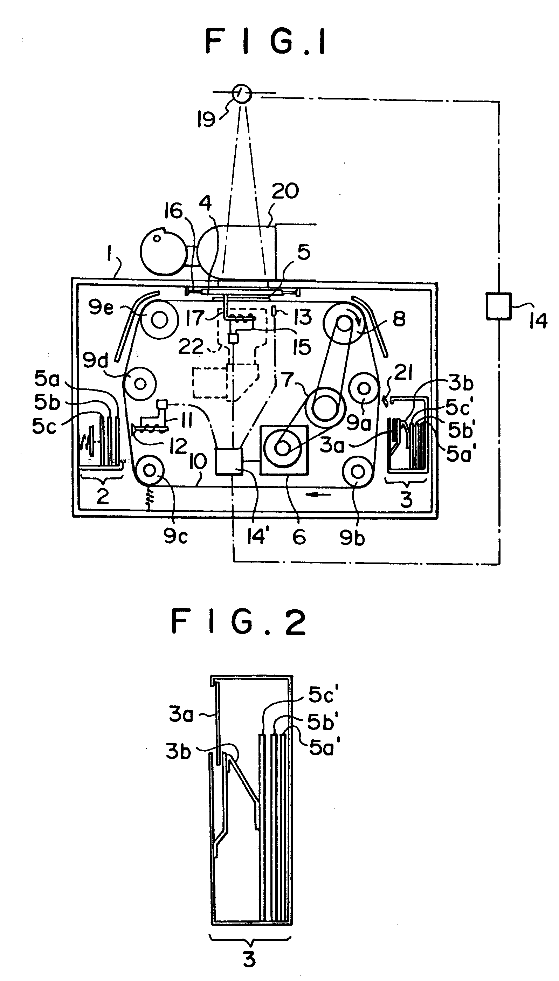

Figure 1 schematically shows an embodiment of the high-speed X-ray image recording apparatus. A high-speed image recording apparatus 1 comprises a first receiving section 2 for receiving stimulable phosphor sheets before exposure to X-rays. The stimulable phosphor sheets may be in the form housed in comparatively simple lighttight envelopes or in the bare form. The high-speed image recording apparatus 1 also comprises a second receiving section 3 for receiving stimulable phosphor sheets after exposure to X-rays, and a conveyance mechanism for taking the stimulable phosphor sheets one by one out of the first receiving section 2, conveying them at high speeds up to an image recording position, and conveying the exposed stimulable phosphor sheets at high speeds to the second receiving section 3. At the image recording section, a grid 4 for preventing scattered X-rays from impinging upon a stimulable phosphor sheet 5 sent to the image recording position is positioned to intervene between the stimulable phosphor sheet 5 and an object 20. As will be described later, the grid 4 should preferably be a moveable grid for movement in parallel with the stimulable phosphor sheet 5 in synchronization with exposure to X-rays.

In the first receiving section 2, a plurality of unexposed stimulable phosphor sheets 5a, 5b, 5c, ... are loaded. When image recording is conducted, the power of a motor 6 is transmitted to a conveying roller 8 via a clutch 7. Since the conveying roller 8 and guide rollers 9a to 9e are engaged with an endless conveyor belt 10, the conveyor belt 10 is moved in the direction of the arrow when the conveying roller 8 is rotated by the motor 6. Then, when a solenoid 11 is energized, a pressing piece 12 is activated to contact the conveyor belt 10 with the first stimulable phosphor sheet 5a among the stimulable phosphor sheets 5a, 5b, 5c, ... loaded in the first receiving section 2. At this time, the conveyor belt 10 releasably grasps, attracts or sucks the stimulable phosphor sheet 5a. For this purpose, for example, the conveyor belt 10 may be provided with clamping claws for engagement with clamping pieces provided on the stimulable phosphor sheets, or may be provided with adhesive tapes. Alternatively, the conveyor belt 10 may be provided with female or male tapes of the face-to-face fastener type, and male or female tapes of this type may be provided on the stimulable phosphor sheets. Also, the conveyor belt 10 may be constructed to magnetically attract the stimulable phosphor sheets one by one.

When the stimulable phosphor sheet 5 is grasped, attracted or sucked as described above by the conveyor belt 10 and conveyed to the image recording position, a limit switch 13 detects the arrival of the stimulable phosphor sheet 5, and the detection signal of the limit switch 13 is sent to a control section 14' in the apparatus. As a result, the clutch 7 is disengaged from the rotation of the motor 6, and a brake (not shown) is activated to stop the movement of the conveyor belt 10. Then, X-rays are emitted by an X-ray generator 19 in accordance with a command given by a control section 14 connected to the aforesaid control section 14' in the apparatus 1, and an image of the X-rays passing through the object 20 is projected onto the stimulable phosphor sheet 5 temporarily stopped as described above in the image recording position.

At the step of projecting the X-ray image onto the stimulable phosphor sheet 5, the grid 4 should preferably be moved in parallel with the stimulable phosphor sheet 5 in synchronization with the timing of image projection in a sequence programmed in advance in the control section 14.

For this purpose, in this embodiment, the moveable grid 4 is hung from the body of the high-speed image recording apparatus 1 via leaf springs 16 mounted on two opposed end portions of the moveable grid 4, and a protrusion 17 of an iron core and a solenoid 15 for the iron core are positioned on another end portion of the moveable grid 4. Before an X-ray image is projected onto the stimulable phosphor sheet 5, the solenoid 15 is energized by the signal sent from the control section 14 to attract the protrusion 17 of the iron core, thereby to hold the moveable grid 4 at the start point of movement.
A predetermined time before the projection start signal is generated, a signal for releasing the moveable grid 4 is sent to the solenoid 15 to have the moveable grid 4 moved by the force of the leaf springs 16. This operation is conducted each time an X-ray image is projected onto a stimulable phosphor sheet.
(Alternatively, the projection start signal may be sent to the X-ray generator 19 a predetermined time after the releasing signal is sent to the solenoid 15.) As described above, the movement of the moveable grid 4 should preferably be started a predetermined time before each image projection step is started, and then the moveable grid 4 is held at the start point of movement after each image projection step is finished. However, it is also possible to continuously move the moveable grid 4 during many image projection steps.

As described above, most of the direct X-rays passing through the object 20 and carrying the effective image information of the object 20 pass through the moveable grid 4 and impinge upon the stimulable phosphor sheet 5 positioned just below the moveable grid 4. On the other hand, most of the X-rays scattered by the object 20 are intercepted by the moveable grid 4. Further, since the moveable grid 4 is moved in synchronization with the recording of the X-ray image, no fine fringe is projected onto the stimulable phosphor sheet 5. Therefore, there is no risk of moire fringes being generated in a final image reproduced by reading out the image stored on the stimulable phosphor sheet 5 by use of a radiation image read-out apparatus. Thus the purpose of making the grid 4 moveable in parallel with the stimulable phosphor sheet 5 is to prevent moire fringes from being generated in the final image reproduced. This technique is described in detail in Japanese Patent Application No. 57(1982)-212236.

When the step of exposure to X-rays is completed, the brake (not shown) is released by a completion signal, and the clutch 7 is connected to the motor 6. In this manner, the second unexposed stimulable phosphor sheet 5b is conveyed to the image recording section and, at the same time, the stimulable phosphor sheet 5 carrying the X-ray image stored therein is conveyed from the image recording section to the second receiving section 3, i.e. a magazine 3 fitted into the image recording apparatus 1. At this time, the stimulable phosphor sheet 5 is disengaged from the conveyor belt 10 by a member 21 for releasing the grasping, attraction or sucking engagement between the stimulable phosphor sheet 5 and the conveyor belt 10, and then loaded into the magazine 3.

Also, during this time, the moveable grid 4 is attracted by the solenoid 15 for the next image recording step.

The high-speed image recording apparatus 1 may further be provided with a combination 22 of an X-ray image intensifier with a television camera in the position indicated by the chain line in Figure 1, so that fluoroscopy can be conducted.

The magazine 3 is provided with a shutter 3a openable from outside the image recording apparatus 1 by use of a handle, knob or the like (not shown), and a leaf spring 3b for guiding the stimulable phosphor sheets 5 and making them gradually fall into the magazine 3. The stimulable phosphor sheets 5 disengaged from the conveyor belt 10 pass throuth the aperture at which the shutter 3a is opened, and gradually fall into the magazine 3 guided by the leaf spring 3b. As shown in Figure 2, when a predetermined number of the stimulable phosphor sheets have been received in the magazine 3, the shutter 3a is closed to shield the inside of the magazine 3 from light, and the magazine 3 housing the stimulable phosphor sheets in the condition shielded from light is disengaged from the body of the high-speed image recording apparatus 1. In this manner, the stimulable phosphor sheets carrying X-ray images stored thereon are taken out of the high-speed image recording apparatus 1 in the condition shielded from light.

The stimulable phosphor sheets housed in the lighttight magazine 3 may be sent in this form to a radiation image read-out apparatus and taken out of the magazine 3 within the radiation image read-out apparatus. Or, the stimulable phosphor sheets may be shifted from the magazine 3 to a different magazine in a darkroom and then introduced into the radiation image read-out apparatus. The former method is suitable particularly when the stimulable phosphor sheets are used in the bare form. The latter method is suitable particularly when the stimulable phosphor sheets are used in the form housed in lighttight envelopes. (In this case, the stimulable phosphor sheets are taken out of the lighttight envelopes in a darkroom and loaded into a different magazine.)

The magazine 3 shown in Figure 2 is a mere example of a magazine usable in the high-speed image recording apparatus. It may have any other configuration and shape insofar as a shutter openable in the condition fitted into the high-speed image recording apparatus and the inside of the magazine is shielded from light by closing the shutter.

Also, it should be understood that the high-speed image recording apparatus can be embodied in various types other than the above described embodiment. For example, instead of conveying the stimulable phosphor sheet by the grasping, attraction or sucking engagement with the conveyor belt 10, the stimulable phosphor sheet may be conveyed by being sandwiched between two belts moving approximately at equal speeds. This conveying method is suitable particularly for the case where the stimulable phosphor sheets are used in the bare form. As described above, since the inside of the high-speed image recording apparatus is generally maintained in the semi-darkroom condition, radiation images stored on the stimulable phosphor sheets are usually not adversely affected. However, in order to secure shielding of the stimulable phosphor sheets from light particularly when the stimulable phosphor sheets are used in the bare form, a light-shielding means may be positioned at least at the conveyance mechanism section downstream of the image recording position and at the magazine mounting section inside of the high-speed image recording apparatus.

In the high-speed image recording apparatus, since the stimulable phosphor sheets may be used in the form not completely shielded from light, they are used in the bare form or in the form housed in the comparatively simple lighttight envelopes for the purpose of improving the operating efficiency of the stimulable phosphor sheets.

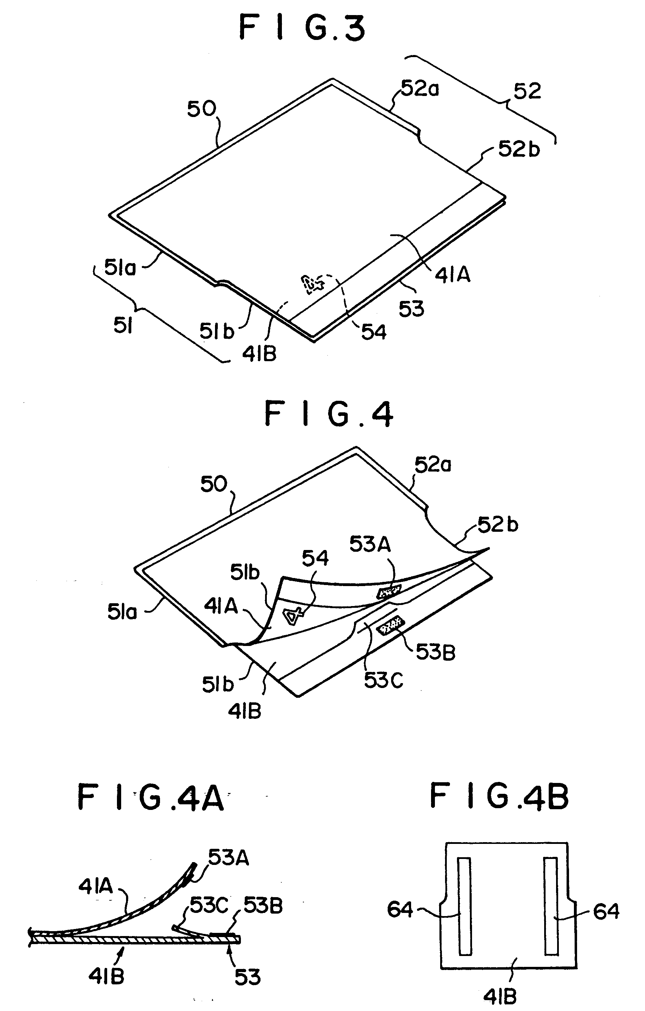

Figures 3 and 4 show an embodiment of the lighttight envelope in accordance with the present invention, which is suitable for use in the high-speed image recording apparatus. Figure 3 is a view of the lighttight envelope with the inlet closed, and Figure 4 is a view thereof with the inlet opened. The lighttight envelope comprises an upper sheet 41A and a lower sheet 41B made of a flexible light-shielding material and having approximately identical rectangular shapes. The upper sheet 41A and the lower sheet 41B are heat-sealed together at one side 50 and at portions 51a and 52a of sides 51 and 52 adjacent the side 50. A side 53 opposite to the side 50 is left open. Also, a portion 51b of the side 51 and a portion 52b of the side 52, which are adjacent the opposite side 53, are left open up to such positions that access to a part of the stimulable phosphor sheet housed in the lighttight envelope is allowed. A face 53A provided with many fine hook-like fibers is positioned on the inner surface of the upper sheet 41A at the open side 53. A face 53B provided with many fine loop-like fibers is positioned on the inner surface of the lower sheet 41B at the open side 53. The faces 53A and 53B together constitute a face-to-face fastener for releasably closing the upper sheet 41A and the lower sheet 41B at the open side 53. Further, the inner surface of the lower sheet 41B at the open side 53 is provided with a flap 53C facing inward for contacting or engaging with the stimulable phosphor sheet housed in the lighttight envelope, thereby securely preventing the stimulable phosphor sheet from coming out of the lighttight envenlope.

The lighttight envelope is provided with an identification number indicating section 54 made of lead or a material impermeable or semi-impermeable to X-rays for indicating an image identification number. Therefore, the identification number can be recorded in the stimulable phosphor sheet simultaneously with recording of an X-ray image.

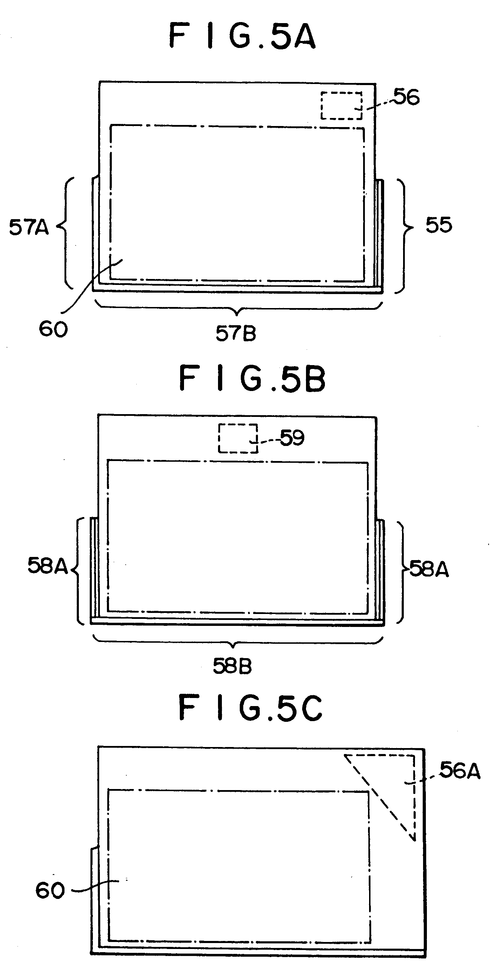

Figures 5A, 5B, and 5C show further embodiments of the lighttight envelope in accordance with the present invention.

In the embodiment of Figure 5A, one of the two sides corresponding to sides 51 and 52 in the embodiment of Figures 3 and 4 is open over the entire length, and a plastic fastener 55 is positioned at the completely open side. In this embodiment, since two sides of the lighttight envelope can be opened widely, insertion and removal of a stimulable phosphor sheet 60 are easier than in the embodiment of Figures 3 and 4. In the embodiment of Figure 5A, a face-to-face fastener 56 for releasably engaging the upper sheet and the lower sheets with each other should preferably be positioned near the side provided with the plastic fastener 55. The lighttight envelope is heat-sealed at portions 57A and 57B.

In Figure 5B, the lighttight envelope is heat-sealed only at a side 58B, and plastic fasteners 58A, 58A are positioned at the two sides adjacent the heat-sealed side 58B. In this embodiment, since the three sides other than the sealed side 58B can be opened completely, insertion and removal of the stimulable phosphor sheet become further easier. A face-to-face fastener 59 for releasably engaging the upper sheet and the lower sheet with each other is positioned at the center of the open side opposite to the sealed side 58B.

In the embodiment of Figure 5C, the plastic fastener 55 in the embodiment of Figure 5A is omitted. In this embodiment, though the degree of sealing becomes somewhat low, it is easy to open and close the lighttight envelope and to insert and remove the stimulable phosphor sheet 60. A face-to-face fastener 56A is positioned closer to the corner of the lighttight envelope than in the embodiment of Figure 5A so that the stimulable phosphor sheet 60 does not come out of the lighttight envelope.

In the aforesaid embodiments of the lighttight envelope, plastic fasteners for fastening by engagement between protruded ribs and grooves are used for preventing the upper sheet and the lower sheet from disengaging. Instead of using the plastic fasteners, it is also possible to use ordinary bite type fasteners, simple hooks, or the face-to-face fasteners as described above.

The lighttight envelope of the present invention can be conveyed at high speeds in the high-speed image recording apparatus by being releasably secured to the conveyor belt. For this purpose, as shown in Figure 4B, faces 64, 64 of a face-to-face fastener provided with hook-like fibers or loop-like fibers may be positioned on the outer surface of the lower sheet 41B of the lighttight envelope, and the other faces of the face-to-face fastener for engagement with the faces 64, 64 may be positioned on the conveyor belt. Or, the lighttight envelope may be conveyed by being sandwiched between two belts.

## Claims

1. An envelope for conveyance of a stimulable phosphor sheet (60) in an image recording apparatus, said envelope being fabricated in a flexible light shielding material and housing the stimulable phosphor sheet therein, the envelope comprising:
an upper sheet (41A) and a lower sheet (41B) having approximately identical rectangular shapes, said sheets being positioned one upon the other to form a rectangular shape which defines said envelope such that said envelope has four edges,
wherein a first of said edges (50) and a portion (51a, 52a) adjacent to said first edge of a second and/or a third edge (51, 52) adjacent to said first edge form a permanently closed connection and wherein at a fourth edge (53) opposite to said first edge and at a portion (51b, 52b) adjacent to said fourth edge of each of said second and third edges (51, 52) the two sheets (41A, 41B) are not permanently connected so that a closable opening is formed,
wherein means (53A, 53B, 56, 56A, 59) are positioned along a part of said fourth edge (53) for releasably closing said closable opening.

2. An envelope as defined in claim 1 wherein said means for releasably closing is a face-to-face fastener (53A, 53B) for fastening by engagement between a face provided with many fine hook-like fibers and a face provided with many fine loop-like fibers.

3. An envelope as defined in claim 1 wherein the inner surface of said lower sheet (41B) at said fourth edge side is provided with a flap (53C) facing inward of the envelope.

4. An envelope as defined in claim 1 wherein an image identification number indicating section (54) made of a material impermeable to a radiation is positioned on one of said upper sheet or said lower sheet.

5. An envelope as defined in claim 1 wherein one of said second and third edges is not permanently connected over the entire length, and a fastening means (55) is positioned at said one edge so as to extend from one end of said first edge up to an intermediate point of said one of the second and third edges.

6. An envelope as defined in claim 5 wherein said means (56) for releasably closing said upper sheet and said lower sheet is positioned near said one edge provided with said fastening means (55).

7. An envelope as defined in claim 1 wherein said second and third edges are open over their entire lengths, and fastening means (58A) are positioned at the completely open edges so as to extend from the ends of said first edge up to intermediate points of said completely open second and third edges.

8. An envelope as defined in claim 7 wherein said means (53A, 53B, 59) for releasably closing is positioned at the center of said fourth edge.

9. An envelope as defined in claim 1 wherein one of the second and third edges is open over the entire length, and said means (56) for releasably closing is positioned close to the corner between said completely open edge and said fourth edge.

## Patentansprüche

1. Tasche für den Transport eines anregbaren Leuchtstoffblatts (60) in einer Bildaufzeichnungsvorrichtung, wobei die Tasche aus einem flexiblen, lichtdichten Material gefertigt ist und in sich das anregbare Leuchtstoffblatt aufnimmt sowie aufweist:
ein oberes Blatt (41A) und ein unteres Blatt (41B) mit annähernd identischer rechteckiger Form, wobei die Blätter derart aufeinandergelegt sind, daß eine Rechteckform gebildet wird, weiche die Tasche derart bildet, daß die Tasche vier Ränder besitzt,
wobei ein erster der Ränder (50) und ein dem ersten Rand benachbarter Abschnitt (51a, 52a) eines zweiten und/oder eines dritten Rands (51, 52) angrenzend an den ersten Rand eine dauernd geschlossene Verbindung bilden, und wobei an einem vierten Rand (53), der dem ersten Rand gegenüberliegt, und an einem an den vierten Rand angrenzenden Abschnitt (51b, 52b) sowohl des zweiten als auch des dritten Randes (51, 52) die beiden Blätter (41A, 41B) nicht dauernd miteinander verbunden sind, so daß eine verschließbare Öffnung gebildet wird,
wobei Mittel (53A, 53B, 56, 56A, 59) entlang einem Teil des vierten Randes (53) angeordnet sind, um die verschließbare Öffnung lösbar zu verschließen.

2. Tasche nach Anspruch 1, bei der die Mittel zum lösbaren Verschließen ein Fläche-Fläche-Verschluß (53A, 53B) sind für ein Verschließen durch den Eingriff zwischen einer Fläche, die mit zahlreichen feinen, hakenförmigen Fasern ausgestattet ist, und einer Fläche, die mit zahlreichen feinen schlingenähnlichen Fasern ausgestattet ist.

3. Tasche nach Anspruch 1, bei der die Innenfläche des unteren Blatts (41B) an der vierten Randseite mit einer Lasche (53C) ausgestattet ist, die zum Inneren der Tasche hin weist.

4. Tasche nach Anspruch 1, bei der ein aus strahlungsundurchlässigem Material gefertigter Bildidentifikationszahl-Anzeigeabschnitt (54) an dem oberen Blatt oder dem unteren Blatt angeordnet ist.

5. Tasche nach Anspruch 1, bei der der zweite oder der dritte Rand nicht dauernd über seine gesamte Länge verschlossen ist und sich Verschlußmittel (55) an dem einen Rand befinden, die sich von einem Ende des ersten Randes bis hin zu einem Zwischenpunkt von dem zweiten bzw. dem dritten Rand erstrecken.

6. Tasche nach Anspruch 5, bei der die Mittel (56) zum lösbaren Verschließen des oberen Blatts und des unteren Blatts in der Nähe des einen Randes gelegen sind, der mit den Verschlußmitteln (55) ausgestattet ist.

7. Tasche nach Anspruch 1, bei der der zweite und der dritte Rand über ihre gesamte Länge offen sind und Verschlußmittel (58A) an den vollständig offenen Rändern angeordnet sind, die sich von den Enden des ersten Randes aus bis zu Zwischenpunkten des vollständig offenen zweiten und dritten Randes hin erstrecken.

8. Tasche nach Anspruch 7, bei der die Mittel (53A, 53B, 59) zum lösbaren Verschließen in der Mitte des vierten Randes angeordnet sind.

9. Tasche nach Anspruch 1, bei der einer von dem zweiten und dem dritten Rand über seine gesamte Länge offen ist, wobei die Mittel (56) zum lösbaren Verschließen nahe bei der Ecke zwischen dem vollständig offenen Rand und dem vierten Rand angeordnet sind.

## Revendications

1. Enveloppe pour transport d'une feuille luminophore stimulable (60) dans un appareil d'enregistrement d'images, ladite enveloppe étant fabriquée dans une matière souple protégeant de la lumière et contenant à l'intérieur la feuille luminophore stimulable, l'enveloppe comprenant :
une feuille supérieure (41A) et une feuille inférieure (41B) ayant des formes rectangulaires à peu près identiques, lesdites feuilles étant placées l'une sur l'autre pour former une forme rectangulaire qui définit ladite enveloppe de telle manière que ladite enveloppe ait quatre côtés ;
dans laquelle un premier desdits côtés (50) et une partie (51a, 52a), adjacente audit premier côté, d'un second et/ou d'un troisième côté (51, 52) adjacents audit premier côté, forment une liaison fermée en permanence et dans laquelle, au droit d'un quatrième côté (53) opposé audit premier côté et d'une partie (51b, 52b) adjacente audit quatrième côté de chacun desdits deuxième et troisième côtés (51, 52), les deux feuilles (41A, 41B) ne sont pas liées de façon permanente de manière à former une ouverture pouvant être fermée ;
dans laquelle des moyens (53A, 53B, 56, 56A, 59) sont situés le long d'une partie dudit quatrième côté (53) pour fermer de manière amovible ladite ouverture pouvant être fermée.

2. Enveloppe selon la revendication 1, dans laquelle ledit moyen pour fermer de manière amovible est une attache face-contre-face (53A, 53B) pour fermeture par mise en prise d'une face pourvue de nombreuses fibres fines en forme de crochet et d'une face pourvue de nombreuses fibres fines en forme de boucle.

3. Enveloppe selon la revendication 1, dans laquelle la surface intérieure de ladite feuille inférieure (41B) au droit dudit quatrième côté est pourvue d'un volet (53C) faisant face vers l'intérieur de l'enveloppe.

4. Enveloppe selon la revendication 1, dans laquelle une section d'indication de numéro d'identification d'image (54), faite d'une matière imperméable au rayonnement, est placée sur l'une de ladite feuille supérieure ou de ladite feuille inférieure.

5. Enveloppe selon la revendication 1, dans laquelle l'un desdits deuxième et troisième côtés n'est pas lié de façon permanente sur toute sa longueur, et dans laquelle un moyen de fixation (55) est situé au droit dudit un côté de manière à s'étendre à partir d'une extrémité dudit premier côté jusqu'à un point intermédiaire dudit un des deuxième et troisième côtés.

6. Enveloppe selon la revendication 5, dans laquelle ledit moyen (56) pour fermer de manière amovible ladite feuille supérieure et ladite feuille inférieure est situé près dudit un côté pourvu dudit moyen de fixation (55).

7. Enveloppe selon la revendication 1, dans laquelle lesdits deuxième et troisième côtés sont ouverts sur toute leur longueur, et dans laquelle des moyens d'attache (58A) sont situés au droit des côtés complètement ouverts de manière à s'étendre à partir des extrémités dudit premier côté jusqu'à des points intermédiaires desdits deuxième et troisième côtés complètement ouverts.

8. Enveloppe selon la revendication 7, dans laquelle ledit moyen (53A, 53B, 59) pour fermer de manière amovible est situé au centre dudit quatrième côté.

9. Enveloppe selon la revendication 1, dans laquelle l'un des deuxième et troisième côtés est ouvert sur toute sa longueur, et dans laquelle ledit moyen (56) pour fermer de manière amovible est situé près du coin entre ledit côté complètement ouvert et ledit quatrième côté.
